# EUROPEAN PATENT SPECIFICATION

(11) **EP 0 483 240 B1**
(45) Date of publication and mention of the grant of the patent: **26.05.1993**
(21) Application number: 90911404.3
(22) Date of filing: 17.07.1990
(51) Int. Cl.: B65D 83/58

(54) **A MIXING CHAMBER FOR MIXING A GASEOUS AND A LIQUID COMPONENT**
MISCHKAMMER ZUM MISCHEN GASFÖRMIGER UND FLÜSSIGER KOMPONENTEN
CHAMBRE DE MELANGE SERVANT A MELANGER UN ELEMENT GAZEUX ET UN ELEMENT LIQUIDE

(30) Priority: 20.07.1989 NL 8901877
(43) Date of publication of application: 06.05.1992
(73) Proprietor: AIRSPRAY INTERNATIONAL B.V., NL-1948 NG Beverwijk (NL)
(72) Inventor: VAN DER HEIJDEN, Edgar, Ivo, Maria, NL-4814 NJ Breda (NL)
(74) Representative: Mommaerts, Johan Hendrik, Dipl.-Phys.
(86) International application number: PCT/NL90/00097
(87) International publication number: WO 91/01259

(56) References cited:
- DE-A- 2 347 546
- GB-A- 2 060 080

## Description

The invention relates to a mixing chamber for mixing a gaseous and a liquid component as defined in this preamble of claim 1.

In DE-A 2 347 546 a mixing chamber of this type is disclosed, in which the inlet connection for the gaseous component is formed by a bore in the lateral wall of this mixing chamber which communicates with the gas space of a spray can or the like on which the mixing chamber is arranged.

Mixing a gaseous and a liquid component with a view to forming a fine mist can lead to difficulties when the fine droplets formed in a spray nozzle flow together in the jet to form larger drops. This leads to an irregular distribution of the liquid on a sprayed surface. By the use of a propellent gas, which dissolves in the liquid and evaporates easily therefrom, such flowing together may be avoided, but there is a growing concern about the use of such propellent gases because of their harmful effects on the environment or their flammability.

When air is used as a propellent, the flowing together of the formed droplets can be prevented by mixing it with the liquid by turbulence in a mixing chamber, but it is difficult to achieve a satisfactory mix in the case of mixing chambers of small size. This applies especially in the case of aerosol cans, in which the mixing chamber needs to be integrated with the distribution valve and the spray nozzle to a unit of limited size which is to be placed on an aerosol can. This impedes the wider use of aerosols using air as their propellent, so that aerosols using the harmful propellent gases remain in general use. In view of, inter alia, a ban in the foreseeable future of the latter aerosols, there is a great need for a solution to this problem. However, this problem of mixing is not limited to aerosol cans and the finding of a solution for such aerosol cans may lead to this application in other fields.

In the above-mentioned known mixing chamber it is extremely difficult to provide connections for the gaseous component having the required small dimensions, which is still more problematical in the case of mixing chambers of small dimensions made by injection moulding. The use of laser beams is not only expensive, but may lead to inaccuracies if used on plastics.

The invention provides a solution of this problem, allowing to manufacture such mixing chambers by cheap mass-production techniques. The mixing chamber according to the invention is characterised by the measures mentioned in the characterising part of claim 1.

The grooves mentioned therein can be formed in a perfectly reproducible way, particularly when using moulds for forming plastic parts.

Further details are enumerated in the subclaims.

The invention will be explained in greater detail with reference to a drawing, in which: -
Fig. 1 is a cross-sectional diagram of an example of a mixing chamber according to the invention;
fig. 2A and 2B are views on an enlarged scale of a part of the mixing chamber; and
fig. 3 is a section along the line III-III in fig. 2A of a somewhat modified form.

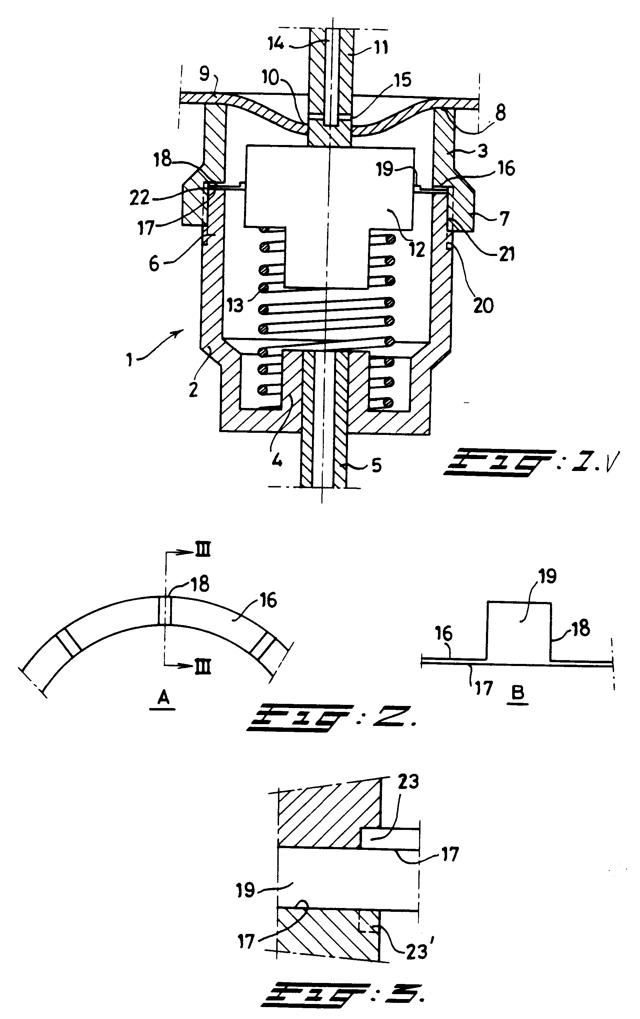

The mixing chamber shown in fig. 1 is part of an aerosol can of which no further description will be given. This mixing chamber 1 consists of a cup-shaped lower part 2 and a ring-shaped cap 3.

The cup 2 is provided on the bottom with a connector pipe for an immersion tube 5 which is immersed in the liquid contained in the aerosol can.

A collar 7 of the cap 3 fits onto the upper edge 6 of the cup 2, its internal diameter corresponding to the external diameter of the edge 6 while the internal diameter of the portion of the cap 3 interconnecting with the collar 7 being equal to the internal diameter of at least the upper edge of the cup 2.

The upper edge 8 of the cap 3 is in sealing contact with a ring seal 9, which is part of the distribution valve assembly of the aerosol can. The lower end of a hollow stem 11 projects into a central orifice 10 of this ring seal 9, said stem being connected to the spray head of the aerosol can. The lower end of the stem 11 rests against a pressure body 12 which is biased upwards by a spring 13 which rests against the bottom of the cup 2, the uppermost position of the stem being defined by an abutting surface which will not be further described.

The lengthwise bore 14 of the stem 11 is in the present case connected with the exterior on either side through a transverse bore 15. which, in the situation here depicted. is above the ring seal 9. The number of transverse bores issuing may be more or less. When the stem 11 is pressed in, it moves within the orifice 10 and the transverse bore 15 comes to be situated on the other side of the ring seal 9, so that the lengthwise bore is connected with the interior of the mixing chamber.

The cap 3 has near its transition to the collar 7 a transverse shoulder 16 which rests against the end surface 17 of the cup 2 and is provided with a number of grooves 18 whcih are more clearly depicted in fig. 2. These grooves together with the end surface 17 delimit channels 19 which connect the exterior of the mixing chamber, in which the propellent is present, to the interior of the mixing chamber. To that end, the external wall of the upper edge 6 of the cup 2 is provided with grooves 20 which together with the collar 7 define passages 21.

It will be obvious that the grooves 18 may alternatively be formed in the end surface 17 and that the grooves 20 may also be formed in the collar 7. In order to ensure a satisfactory interconnection between the passages 21 and the channels 19, the upper edge 16 of the cup 2 is bevelled on its outside, as is indicated at 22.

After the stem 11 is pressed in, the liquid will be driven out of the aerosol can via the tube 5 into the annular space around the body 12 of the mixing chamber 1, the propellent gas also entering into this space via the channels 19. A turbulence then occurs, by which a satisfactory mixing of liquid and propellent gas is achieved, which will lead to a fine mist as the mixture leaves the nozzle of the aerosol.

This is particularly significant if air is used as the propellent gas, since air dissolves so badly in the liquid to be sprayed that the flowing together of droplets is not thereby stopped. By mixing in air in the mixing chamber that can be avoided. This, by the way, also applies for other propellent gases as well, if the formation of mist without mixing them in should be insufficient.

The channels must have a diameter such that satisfactory mixing takes place. This, of course, also depends on the shape of the mixing chamber 1 and the nature of the liquid to be sprayed. If air is used as the propellent gas, a total area of the channels 19 of 0,3 mm² will be suitable, which, divided over, say, seven channels, leads to channels with a width of about 0,2 mm.

The number of channels 19 depends on the turbulence to be achieved in the mixing chamber. It is preferable to choose an odd number if the number of transverse bores 15 in the end of the stem is an even one and contrariwise, in order to avoid as much as possible a direct influx from a channel 19 into a transverse bore 15. It is also possible to have the grooves 17 slanted so as to enhance the turbulence.

Fig. 3 shows a modified example. In this embodiment, the channels 19 issue into a circumferential groove 23 in the inner wall of the mixing chamber. This has proved to enhance the mixing. The groove may also, or instead, be provided in the upper portion of the cup, as is shown in fig. 3 in dotted lines at 23'.

Because the mixing chamber is formed of two parts 2 and 3, the various grooves 18 and 20 may be easily formed during injection moulding of these parts, so that inexpensive mass-production is possible. Channels of the aforesaid limited size cannot be achieved in properly controllable sizes by conventional methods (such as fillers in injection moulds, laser beams and suchlike), especially in mixing chambers of limited size, as is the case with mixing chambers for aerosol cans.

It has been found that if the channel dimensions are suitably chosen in relation to the dimensions of the immersion tube 5 and/or the annular passage 13, an aerosol can provided with such a mixing chamber 1 will also work satisfactorily if held upside down, so that the channels 19 interconnect with the liquid space and the tube 5 with the propellent gas space.

## Claims

1. Mixing chamber (1) for mixing a gaseous and a liquid component, said mixing chamber being provided with separate inlet connections for the pressurized components for the mixture which is to be formed, and an outlet connection (11) for the formed mixture to a space which is at a lower pressure, **characterized** in that it consists of two parts (2, 3) having connecting surfaces (16, 17) which meet at the inner wall, at least one of these surfaces (16, 17) being provided with grooves (18) which define, together with the surface (16, 17) of the other part, narrow channels (19) with a transverse dimension not greater than about 1 mm and preferably less than about 0,25 mm.

2. Mixing chamber according to claim 1, **characterized** in that one part (2) of the mixing chamber (1) is cup-shaped and is provided with a connection (5) for one component, whereas the other part (3) is a cap which mates with the opening of said cup-shaped part (2), and is provided with a shoulder (16), the grooves (18) being formed in either this shoulder (16) or in the end face (17) of the cup-shaped part (2) which enters into contact therewith, said grooves (18) being connected externally with an inlet for the other component.

3. Mixing chamber according to claim 2, **characterized** in that the flange (16) of the cap (3) comprises a collar (7) which fits around the exterior wall (6) of the cup-shaped part (2), and in that the exterior wall (6) or the collar (7) is provided with grooves (20) which, together with the collar (7) or the exterior wall (6), respectively, delimit the inlet for the other component.

4. Mixing chamber according to claim 3, **characterized** in that the edge of the external wall of the cup-shaped part (2) is bevelled (22), in order to ensure an interconnection between the grooves (18, 20) at the end face of the cup and those on its side.

5. Mixing chamber according to one of claims 1..4, **characterized** in that the interior wall of the mixing chamber (1) is provided, at the mouth of the channels (19) with a recess (23, 23').

6. Mixing chamber according to one of claims 1..5, intended for an aerosol can for spraying a liquid with a propellent gas provided above the liquid surface, in particular compressed air, said propellent gas having to be mixed with the liquid to be sprayed, the outlet of the mixing chamber being comprised of the hollow stem (11) of an aerosol head, the bore (14) of which may be placed in connection with the mixing chamber by means of a distribution valve (9), **characterized** in that the narrow channels (19) normally connect to the propellent gas space of the aerosol can.

7. Mixing chamber according to claim 6, it being possible to connect the bore (14) of the stem (11) to the mixing chamber (1) by means of transverse bores (15) which may be closed by the distribution valve (9) **characterized** in that the number of narrow grooves (18) is odd or even, respectively, the number of transverse bores (10) being even or odd, as the case may be.

8. Mixing chamber according to one of claims 1..7, **characterized** in that all parts of the mixing chamber (1) are formed by injection moulding.

## Patentansprüche

1. Mischkammer (1) zum Mischen einer gasförmigen und einer flüssigen Komponente, welche Mischkammer mit getrennten Einlaßverbindungen für die unter Druck stehenden Komponenten für die auszubildende Mischung, und mit einer Auslaßverbindung (11) für die gebildete Mischung in einen Raum, der unter geringerem Druck steht, versehen ist, **dadurch gekennzeichnet,** daß die Kammer aus zwei Teilen (2, 3) besteht, die Verbindungsflächen (16, 17) aufweisen, die sich an der inneren Wandung treffen, wobei mindestens eine dieser Oberflächen (16, 17) mit Nuten (18) versehen ist, die zusammen mit der Oberfläche (16, 17) des anderen Teils enge Kanäle (19) mit einer Querabmessung nicht größer als etwa 1 mm und vorzugsweise weniger als etwa 0,25 mm bestimmen.

2. Mischkammer nach Anspruch 1, **dadurch gekennzeichnet,** daß der eine Teil (2) der Mischkammer (1) napfförmig ausgebildet ist und mit einer Verbindung (5) für eine Komponente versehen ist, während der andere Teil (3) eine Kappe ist, welche zusammenpaßt mit der Öffnung des napfförmigen Teils (2) und versehen ist mit einer Schulter (16), wobei die Nuten (18) in entweder dieser Schulter (16) oder der Endfläche (17) des napfförmigen Teils (2) welches in Kontakt damit steht, ausgebildet sind, und wobei die Nuten (18) außen mit einem Einlaß für die andere Komponente verbunden sind.

3. Mischkammer nach Anspruch 2, **dadurch gekennzeichnet,** daß der Flansch (16) der Kappe (3) einen Kragen (7) aufweist, der um die Außenwandung (6) des napfförmigen Teils (2) paßt, und daß die Außenwandung (6) des Kragens (7) mit Nuten (20) versehen ist, welche zusammen mit dem Kragen (7) bzw. der Außenwandung (6) den Einlaß für die andere Komponente begrenzen.

4. Mischkammer nach Anspruch 3, **dadurch gekennzeichnet,** daß die Kante der Außenwandung des napfförmigen Teils (2) abgeschrägt (22) ist, um eine Verbindung zwischen den Nuten (18, 20) an den Endflächen des Napfes bzw. an dessen Seitenwand sicherzustellen.

5. Mischkammer nach einem der Ansprüche 1 bis 4, **dadurch gekennzeichnet,** daß die Innenwandung der Mischkammer (1) an der Mündung der Kanäle (19) mit einer Ausnehmung (23, 23') versehen ist.

6. Mischkammer nach einem der Ansprüche 1 bis 5, welche für eine Aerosoldose zum Versprühen einer Flüssigkeit mit einem oberhalb der Flüssigkeitsfläche vorgesehenen Treibgas, insbesondere Druckluft, bestimmt ist, wobei das Treibgas mit der zu versprühenden Flüssigkeit gemischt werden soll, wobei der Auslaß der Mischkammer aus einem hohlen Stiel (11) eines Aerosolkopfes besteht, dessen Bohrungen (15) über ein Verteilerventil (9) in Verbindung mit der Mischkammer gesetzt werden können, **dadurch gekennzeichnet,** daß die engen Kanäle (19) normalerweise mit dem Treibgasraum der Aerosoldose in Verbindung stehen.

7. Mischkammer nach Anspruch 6, bei welcher es möglich ist, die Bohrung (14) des Stieles (11) mit der Mischkammer (1) durch Querbohrungen (15) zu verbinden, die durch das Verteilungsventil (9) geschlossen werden können, **dadurch gekennzeichnet,** daß die Anzahl der engen Nuten (18) ungerade bzw. gerade ist, wobei die Anzahl der Querbohrungen (10) dementsprechend gerade bzw. ungerade ist.

8. Mischkammer nach einem der Ansprüche von 1 bis 7, **dadurch gekennzeichnet,** daß alle Teile der Mischkammer (1) durch Spritzguß geformt worden sind.

## Revendications

1. Chambre de mélange (1) pour mélanger un élément gazeux et un élément liquide, ladite chambre de mélange comportant des connexions d'entrée séparées pour les composants sous pression du mélange à former et une connexion de sortie (11) du mélange formé vers un espace qui est à une pression plus faible, caractérisée en ce qu'elle est constituée de deux parties (2,3) présentant des surfaces de jonction (16,17) qui se rejoignent à l'endroit de la paroi intérieure, au moins une de ces surfaces (16,17) comportant des rainures (18) qui définissent, en combinaison avec la surface (16,17) de l'autre partie, des canaux étroits (19) dont la dimension transversale ne dépasse pas 1mm environ et est de préférence inférieure à 0,25mm environ.

2. Chambre de mélange suivant la revendication 1, caractérisée en ce qu'une partie (2) de la chambre de mélange (1) est en forme de tasse et comporte une connexion (5) pour un composant du mélange, tandis que l'autre partie (3) est un chapeau qui s'accouple avec l'ouverture de ladite partie en forme de tasse (2) et qui comporte un épaulement (16), les rainures (18) étant formées dans cet épaulement (16) ou dans la face d'extrémité (17) de la partie en forme de tasse (2) qui vient en contact avec l'épaulement, lesdites rainures (18) communiquant extérieurement avec une entrée pour l'autre composant du mélange.

3. Chambre de mélange suivant la revendication 2, caractérisée en ce que l'épaulement (16) du chapeau (3) est pourvu d'un collet (7) qui s'ajuste autour de la paroi extérieure (6) de la partie en forme de tasse (2), et en ce que la paroi extérieure (6) ou le collet (7) comporte des rainures (20) qui délimitent, en combinaison avec le collet (7) ou la paroi extérieure (6), respectivement, l'entrée pour l'autre composant du mélange.

4. Chambre de mélange suivant la revendication 3, caractérisée en ce que le bord de la paroi extérieure de la partie en forme de tasse (2) est chanfreiné (22) afin d'assurer une interconnexion entre les rainures (18) et les rainures (20) prévues dans la face d'extrémité de la tasse d'une part et dans sa face latérale d'autre part.

5. Chambre de mélange suivant l'une des revendications 1 à 4, caractérisée en ce que la paroi intérieure de la chambre de mélange (1) présente, à l'embouchure des canaux (19), un évidement (23,23').

6. Chambre de mélange suivant l'une des revendications 1 à 5, destinée à un récipient d'aérosol pour pulvériser un liquide avec un gaz propulseur prévu au-dessus de la surface du liquide, en particulier de l'air comprimé, ledit gaz propulseur devant être mélangé au liquide à pulvériser, la sortie de la chambre de mélange étant constituée par la tige creuse (11) d'une tête pour aérosol, dont le passage intérieur (14) peut être mis en communication avec la chambre de mélange au moyen d'une valve de distribution (9), caractérisée en ce que les canaux étroits (19) communiquent normalement avec l'espace de gaz propulseur du récipient pour aérosol.

7. Chambre de mélange suivant la revendication 6, le passage intérieur (14) de la tige (11) pouvant communiquer avec la chambre de mélange (1) par des trous transversaux (15) qui peuvent être fermés par la valve de distribution (9), caractérisée en ce que le nombre de rainures étroites (18) est impair ou pair, respectivement, le nombre de trous transversaux (15) étant pair ou impair, selon le cas.

8. Chambre de mélange suivant l'une des revendications 1 à 7, caractérisée en ce que toutes les parties de la chambre de mélange (1) sont formées par moulage par injection.
